# EUROPÄISCHE PATENTSCHRIFT

(11) **EP 1 085 939 B1**
(45) Veröffentlichungstag und Bekanntmachung des Hinweises auf die Patenterteilung: **06.08.2003**
(21) Anmeldenummer: 99932643.2
(22) Anmeldetag: 06.05.1999
(51) Int. Cl.: B01D 53/86, B01D 53/94

(54) **VERFAHREN UND VORRICHTUNG ZUR SELEKTIVEN KATALYTISCHEN REDUKTION VON STICKOXIDEN IN EINEM SAUERSTOFFHALTIGEN GASFÖRMIGEN MEDIUM**
METHOD AND DEVICE FOR SELECTIVE CATALYTIC REDUCTION OF NITROGEN OXIDES IN A GASEOUS MEDIUM CONTAINING OXYGEN
PROCEDE ET DISPOSITIF POUR LA REDUCTION CATALYTIQUE SELECTIVE D'OXYDES D'AZOTE DANS UN MILIEU GAZEUX RENFERMANT DE L'OXYGENE

(30) Priorität: 11.05.1998 DE 19821055
(43) Veröffentlichungstag der Anmeldung: 28.03.2001
(73) Patentinhaber: SIEMENS AKTIENGESELLSCHAFT, 80333 München (DE)
(72) Erfinder: RUSCH, Petra, Anette, D-96129 Geisfeld (DE); MATHES, Wieland, D-96247 Michelau (DE); MÜLLER, Raimund, Alpharetta, GA 30202 (US); RUSCH, Klaus, D-96129 Geisfeld (DE); SIGLING, Ralf, Alpharetta, GA 30022 (US)
(86) Internationale Anmeldenummer: DE9901367
(87) Internationale Veröffentlichungsnummer: WO99058230

(56) Entgegenhaltungen:
- EP-A- 0 555 746
- EP-A- 0 558 452
- EP-A- 0 583 878

## Beschreibung

Die Erfindung bezieht sich auf ein Verfahren zur selektiven katalytischen Reduktion von Stickoxiden in einem sauerstoffhaltigen gasförmigen Medium unter Anwendung einer in ein Reduktionsmittel umsetzbaren Substanz, wobei die Substanz in einem separaten Aufbereitungsreaktor zunächst im wesentlichen thermisch in das Reduktionsmittel umgesetzt und anschließend das Reduktionsmittel zur Reaktion mit den Stickoxiden dem gasförmigen Medium vor einem Reduktionskatalysator beigegeben wird. Das gasförmige Medium ist beispielsweise das Abgas einer Verbrennungsanlage oder ein sauerstoffhaltiges Prozeßgas einer technischen oder großtechnischen Anlage z.B. der chemischen Industrie. Prinzipiell kann jedes Sauerstoff enthaltende Gas, welches entstickt werden soll, behandelt werden. Des weiteren bezieht sich die Erfindung auf eine Vorrichtung zur Durchführung des angegebenen Verfahrens.

Das Verfahren der selektiven katalytischen Reduktion (SCR = selective catalytic reduction) zur Beseitigung von Stickoxiden aus einem sauerstoffhaltigen gasförmigen Medium hat sich mittlerweile als ein technisch gut beherrschbares Verfahren etabliert. Insbesondere wird das Verfahren zur Entstickung von Abgasen von Verbrennungsanlagen, auch Dieselmotoren, eingesetzt. Dabei werden die in dem Abgas enthaltenen Stickoxide in Anwesenheit von Sauerstoff an einem selektiv arbeitenden Reduktionskatalysator mittels eines geeigneten Reduktionsmittels in molekularen Stickstoff und Wasser umgesetzt. Als Reduktionskatalysator hat sich dabei ein Katalysator auf Basis von Titandioxid durchgesetzt, der zusätzlich Beimengungen an Molybdäntrioxid, Wolframtrioxid und/oder Vanadinpentoxid aufweist. Als ein effektives Reduktionsmittel hat sich Ammoniak (NH3) gegenüber anderen Reduktionsmitteln wie Kohlenwasserstoffen oder Cyanursäure durchgesetzt.

Da Ammoniak jedoch eine stark riechende und in höherer Konzentration auch toxische Verbindung ist, existieren länderspezifische Vorschriften für eine sichere Lagerung und Handhabung. Insbesondere müssen erhebliche, Kosten verursachende Sicherheitsvorkehrungen getroffen werden, wenn Ammoniak als Reduktionsmittel zur Reinigung der Abgase von dieselgetrieben Personenkraftwagen, Nutzfahrzeugen oder sonstigen Fahrzeugen in einem entsprechend abgesicherten Tank mitgeführt werden muß.

Einen Ausweg weist die Siemens Firmenschrift "SINOX, Stickoxidminderung für stationäre Dieselmotoren", Bestell-Nr. A 96001-U91-A232, 1997, in der vorgeschlagen wird, anstelle von Ammoniak eine in Ammoniak umsetzbare Substanz, nämlich Harnstoff, zu verwenden. Im Gegensatz zu Ammoniak ist nämlich der Umgang mit Harnstoff bei Transport und Lagerung völlig unbedenklich. Zur Reduktion der Stickoxide wird dabei eine wässrige Harnstofflösung direkt in die Abgasleitung vor dem Reduktionskatalysator eingesprüht. Infolge der relativ hohen Abgastemperaturen findet eine Zersetzung des Harnstoffs durch Pyro- und durch Hydrolyse in Ammoniak statt, welches dann als eigentliches Reduktionsmittel an dem Reduktionskatalysator mit den Stickoxiden in der oben angegebenen Art und Weise umgesetzt wird.

Bei einem derartigen Verfahren sind jedoch noch eine Reihe technischer Fragen ungelöst. Beispielsweise birgt die Zersetzung von Harnstoff im Gasstrom das Problem der Bildung von unerwünschten Sekundärprodukten, die teilweise feste und unlösbare Ablagerungen an nachgeschalteten Bauteilen bilden. Derartige unerwünschte Sekundärprodukte sind z.B. Cyanursäure, aus welcher unlösliche Melamine gebildet werden, oder auch Ammoniumsulfate, die entstehen, falls Schwefeloxide vorhanden sind. Auch kann zusätzlich der Harnstoff vor oder bei der Eindüsung in den Gasstrom auskristallisieren und zu Verstopfungen der Harnstoff führenden Teile führen.

Zur Lösung der angesprochenen Probleme ist es bekannt, den Harnstoff bei der Einbringung in den Gasstrom besonders fein zu zerstäuben, zur Unterstützung der Hydrolyse einen geeigneten Katalysator zu verwenden oder den Harnstoff zur schnellen Zersetzung auf einen im Gasstrom angeordneten Verdampfer aufzusprühen. Derartige Lösungen sind beispielsweise aus der EP 0 487 886 B1 für einen Abgasstrom bekannt.

Insbesondere bei einer Großanlage wie einem Fossilkraftwerk, wobei zur Abgasbehandlung das Reduktionsmittel mittels eines eine Vielzahl von Düsen umfassenden Eindüsegitters in das Abgas eingebracht werden muß, um eine gleichmäßige Verteilung im Abgaskanal zu erzielen, muß jedoch im Falle der Verwendung von Harnstoff nach wie vor jede einzelne Düse separat gesteuert werden, um bei Zusetzen einer Düse die erforderliche Menge an Reduktionsmittel durch eine Mehrzufuhr der anderen Düsen ausgleichen zu können. Auch mit den genannten Maßnahmen kann das Zusetzen einer Düse nämlich nicht ausgeschlossen werden.

Alternativ zu einer Zersetzung des Harnstoffs in dem Abgasstrom ist in der EP 0 487 886 B1 auch beschrieben, die Zersetzung des Harnstoffs außerhalb des Abgasstromes vorzunehmen. Dabei wird eine Harnstofflösung in einem separaten Aufbereitungsreaktor mittels einer Sprühvorrichtung zur Pyrolyse auf einen beheizten Verdampfer aufgebracht und das entstehende Gasgemisch über einen nachgeschalteten Hydrolyse-Katalysator geleitet. Erst dann wird das gebildete Gasgemisch aus Ammoniak und Resten in den Abgasstrom eingebracht. Die Regelung der Menge an zudosiertem Ammoniak geschieht über eine Regulierung der Menge des Gasgemisches.

Auf diese Weise entstehen unerwünschte Sekundärprodukte nicht direkt im, sondern außerhalb des Abgasstroms der Verbrennungsanlage, wo weniger Beeinträchtigungen zu erwarten sind.

Jedoch muß bei einer solchen Vorgehensweise der Verdampfer mit zusätzlicher Energie auf die zur Hydrolyse erforderliche Temperatur aufgeheizt werden. Im Gegensatz zu einem sich im Abgasstrom befindlichen Verdampfer wird der separate Verdampfer nämlich nicht durch das an ihn vorbeistreichende heiße Abgas vorgewärmt. Für eine wirtschaftliche Arbeitsweise wird für den Verdampfer eine eher kleine Fläche gewählt, um mit einem möglichst geringen Energieaufwand eine möglichst heiße Oberfläche des Verdampfers erzielen zu können.

Bei einer großtechnischen Anlage mit großem Querschnitt des Abgaskanals und/oder einem hohen Abgasvolumenstrom wie einem Fossilkraftwerk oder einer Gasturbine oder einer Großanlage der chemischen Industrie, bei welcher pro Zeiteinheit eine große Menge an zu entstickendem Prozeßgas anfällt, muß jedoch die Oberfläche des Verdampfers groß genug gewählt werden, um eine möglichst vollständige Zersetzung des Harnstoffs in Ammoniak zu gewährleisten. Um einen derartigen großflächigen Verdampfer jedoch auf die zur Umsetzung in das Reduktionsmittel erforderliche Temperatur aufzuheizen, ist ein hoher zusätzlicher Energieeintrag notwendig. Dies macht das Verfahren gemäß Stand der Technik bei großen Anlagen unwirtschaftlich, weshalb es z.B. bei Gasturbinen und Fossilkraftwerken mit großen Abgaskanalquerschnitten oder Großanlagen der chemischen Industrie mit einer hohen Menge an Prozeßgas, welches entstickt werden muß, nicht zum Einsatz kommt.

Aufgabe der Erfindung ist es daher, ein Verfahren zur selektiven katalytischen Reduktion von Stickoxiden in einem sauerstoffhaltigen, gasförmigen Medium unter Anwendung einer in ein Reduktionsmittel umsetzbaren Substanz anzugeben, welches die genannten Nachteile einer direkten Einbringung der noch nicht umgesetzten Substanz in das gasförmige Medium vermeidet und gleichzeitig insbesondere bei Großanlagen mit hohem Abgasvolumenstrom oder einer pro Zeiteinheit anfallenden hohen Menge an zu entstickendem Prozeßgas oder sonstigem Gas effektiv und wirtschaftlich arbeitet. Ferner ist es Aufgabe der Erfindung, zur Durchführung des Verfahrens eine Vorrichtung mit besonders einfachen technischen Mitteln anzugeben.

Die erstgenannte Aufgabe wird gelöst durch ein Verfahren zur selektiven katalytischen Reduktion von Stickoxiden in einem sauerstoffhaltigen, gasförmigen Medium unter Anwendung einer in ein Reduktionsmittel umsetzbaren Substanz, wobei die Substanz in einem separaten Aufbereitungsreaktor zunächst im wesentlichen thermisch in das Reduktionsmittel umgesetzt und anschließend das Reduktionsmittel zur Reaktion mit den Stickoxiden dem gasförmigen Medium vor einem Reduktions-Katalysator beigegeben wird, wobei die Substanz in ein den Aufbereitungsreaktor durchströmendes Trägergas eingebracht und in dem Trägergas umgesetzt wird, wobei die Energie zur thermischen Umsetzung von dem Trägergas zur Verfügung gestellt wird, wobei erfindungsgemäß ein Teil des Trägergases nach Durchlaufen des Reaktors abgezweigt und erneut dem Aufbereitungsreaktor zugeführt wird.

Die Erfindung geht von der Überlegung aus, daß bei der Verwendung eines Verdampfers für den Energieübertrag vom Verdampfer in die umzusetzende Substanz nur die relativ kleine Zeitspanne des direkten Kontaktes zwischen der Substanz und der Verdampferoberfläche zur Verfügung steht. Für die Umsetzung einer vorgegebenen Menge an Substanz mittels eines Verdampfers muß daher mehr Energie zugeführt werden als für die thermische Zersetzung der Substanz theoretisch notwendig wäre. Aus diesem Grund ist die Umsetzung der Substanz in das Reduktionsmittel mittels eines separaten Verdampfers um so unwirtschaftlicher je größer die pro Zeiteinheit anfallende Menge an zu behandelndem Gas und damit der benötigten Menge an Reduktionsmittel ist.

Gegenüber der Verwendung eines Verdampfers läßt sich jedoch die für die Umsetzung der Substanz erforderliche Energie deutlich verringern, wenn der Energieeintrag über ein Trägergas geschieht, in welches die Substanz eingebracht wird. Hierzu kann das Trägergas beispielsweise erwärmt sein, wobei die Umsetzung natürlich um so rascher abläuft, je höher die Temperatur des Trägergases ist. Die Substanz nimmt von dem umgebenden Trägergas solange Energie auf, bis es thermisch zerfällt oder umgesetzt ist. Die für den Energieübertrag zur Verfügung stehende Zeit ist auf die gesamte Reaktionsdauer verlängert. Aus diesem Grund kann die Temperatur des Trägergases niedriger gewählt werden als die Temperatur eines entsprechend für die Umsetzung vorgesehenen Verdampfers. So beträgt beispielsweise eine übliche Temperatur für einen Verdampfer, welcher für die Hydrolyse von Harnstoff in Ammoniak verwendet wird, ca. 200 bis 300 °C, wohingegen für die Hydrolyse von Harnstoff in einem erwärmten Trägergas dieses nur eine Temperatur von ca. 150 bis 200 °C aufzuweisen braucht.

Auch braucht bei der Verwendung eines Eindüsegitters zum Einbringen des Reduktionsmittels in das gasförmige Medium, insbesondere einem Abgasstrom, nicht mehr jede einzelne Düse des Eindüsegitters separat geregelt zu werden, da das Zusetzen der Einbringdüsen durch Folgeprodukte der Umsetzung verhindert ist. Auf der anderen Seite ist auch bei der Einbringung der Substanz in den Aufbereitungsreaktor keine separate Kontrolle jeder Einbringvorrichtung notwendig, um auch bei einer Zusetzung noch Kontrolle über die einzubringende Menge an Substanz zu haben, wenn die Regelung der pro Zeiteinheit einzubringenden Menge an Reduktionsmittel in einer Zuführleitung für das Reduktionsmittel von dem Aufbereitungsreaktor zum gasförmigen Medium, d.h. nach erfolgter Umsetzung der Substanz, vorgenommen wird.

Als Trägergas eignet sich prinzipiell jedes Gas, das hinsichtlich der gewünschten thermischen Umsetzung der Substanz inert ist. Insbesondere eignet sich auch Luft als ein derartiges Trägergas.

Eine Erwärmung des Trägergases kann in an sich bekannter Art und Weise sowohl indirekt als auch direkt durch entlang dem Gasstrom angeordnete Wärmetauscher mit Gas, Dampf oder Flüssigkeit als Wärmequelle, durch elektrische Heizspiralen oder durch Erhitzen eines Reservoirs für das Trägergas geschehen. Auch kann beispielsweise heißer Dampf in das Trägergas eingespritzt werden.

Gemäß dem Verfahren der Erfindung wird ein Teil des Trägergases nach Durchlaufen des Aufbereitungsreaktors abgezweigt und über eine Rückführleitung erneut dem Aufbereitungsreaktor zugeführt. Auf diese Art und Weise kann die Zufuhr an Trägergas reduziert und gleichzeitig die Konzentration an Reduktionsmittel im Auslaß des Aufbereitungsreaktors erhöht werden. Über eine Steuerung der Durchflußmenge in der Rückführleitung kann damit die Konzentration an Reduktionsmittel, welche dem gasförmigen Medium zugeführt wird, geregelt werden.

Besonders von Vorteil bei einem heißen gasförmigen Medium ist es, wenn ein Teilstrom des gasförmigen Mediums aus dem Hauptstrom abgezweigt und dieser abgezweigte Teilstrom selbst als das Trägergas durch den Aufbereitungsreaktor geleitet und zusammen mit dem Reduktionsmittel wieder dem Hauptstrom des gasförmigen Mediums beigegeben wird. Diese Ausgestaltung bietet sich insbesondere bei der Behandlung des Abgases einer Verbrennungsanlage an, da das Abgas der Verbrennungsanlage in der Regel bereits die für die Umsetzung der Substanz erforderliche Temperatur aufweist. In diesem Fall kann eine separate Erwärmung des Trägergases entfallen. Auch ist kein zusätzliches. Trägergas erforderlich.

Vorteilhafterweise kann auch die für die Umsetzung vorgesehene Substanz selbst vorgeheizt werden, ehe sie in dem Aufbereitungsreaktor in das Trägergas eingebracht wird. Auf diese Weise kann das Trägergas selbst eine niedrigere Temperatur aufweisen, als es zur Umsetzung der Substanz erforderlich wäre. Die Vorheizung der Substanz kann dabei in gleicher Art und Weise wie die Erwärmung des Trägergases erfolgen.

Von Vorteil ist es weiterhin, wenn die Substanz mittels einer Druckleitung in den Aufbereitungsreaktor eingedüst wird. Auf diese Weise wird eine gute Durchmischung des Trägergases mit der umzusetzenden Substanz in dem Aufbereitungsreaktor erzielt.

Unter einer umsetzbaren Substanz wird jede Substanz verstanden, die zumindest teilweise thermisch in ein für das SCR-Verfahren geeignetes Reduktionsmittel umgesetzt werden kann. Insbesondere Vorläufersubstanzen von Reduktionsmitteln wie Kohlenwasserstoff, Cyanursäure oder Ammoniak. Ammoniak freisetzende Substanzen sind beispielsweise Ammoniumcarbonat, Ammoniumhydrogencarbonat oder Harnstoff.

Da für die SCR-Technologie Ammoniak ein hervorragendes Reduktionsmittel ist, und für die Umsetzung der Stickoxide mittels Ammoniak eine Reihe von technisch ausgereiften Katalysatoren bekannt sind, ist es von Vorteil, für die Substanz eine wässrige Harnstofflösung zu verwenden, aus welcher im Aufbereitungsreaktor durch Verdampfung, Pyro- und Hydrolyse als Reduktionsmittel Ammoniak gebildet wird. Ebenso ist es möglich, zur Bildung von Ammoniak als Substanz Ammoniakwasser zu verwenden.

Die Umsetzung der Substanz in dem Trägergas läßt sich weiter verbessern, wenn das Trägergas zusammen mit der eingebrachten Substanz zusätzlich mit einem Katalysator kontaktiert wird, welcher die Umsetzung der Substanz in das Reduktionsmittel katalysiert. Insbesondere zur Hydrolyse von Harnstoff eignet sich ein Katalysator auf Basis von Titandioxid mit Beimengungen an Vanadinpentoxid, Aluminiumoxid und/oder Siliziumoxid. Es hat sich dabei gezeigt, daß es insbesondere von Vorteil ist, wenn der Vanadinpentoxid-Gehalt des Katalysators zwischen 0,02 und 1,3 Gew.-% beträgt. Als Katalysatoren eignen sich prinzipiell an sich bekannte Katalysatoren in Plattenoder Wabenform mit Trägermaterialien aus Metall, Keramik oder sonstigen hitzebeständigen Materialien.

Die zweitgenannte Aufgabe wird gelöst durch eine Vorrichtung zur selektiven katalytischen Reduktion von Stickoxiden in einem sauerstoffhaltigen gasförmigen Medium unter Anwendung einer in ein Reduktionsmittel umsetzbaren Substanz, mit einer Gasleitung zur Führung des gasförmigen Mediums, mit einem in der Gasleitung angeordneten, von dem gasförmigen Medium durchströmbaren Reduktions-Katalysator und mit einem der Gasleitung nebengeordneten Aufbereitungsreaktor zur im wesentlichen thermischen Umsetzung der Substanz in das Reduktionsmittel, wobei der Aufbereitungsreaktor einen Einlaß für die Substanz und einen Auslaß für das Reduktionsmittel aufweist, und wobei an dem Auslaß eine Abführleitung angeschlossen ist, welche in Strömungsrichtung des gasförmigen Mediums vor dem Reduktions-Katalysator in die Gasleitung mündet, wobei an dem Aufbereitungsreaktor über eine Einspeisestelle eine Zuführleitung für ein Trägergas angeschlossen, der Aufbereitungsreaktor von dem Trägergas von der Einspeisestelle in Richtung zum Auslaß für das Reduktionsmittel durchströmbar und daß der Einlaß zur Einbringung der Substanz in das Trägergas ausgebildet ist, wobei erfindungsgemäß an der abführleitung des Raktors eine Abzweigleitung angeordnet ist, welche in die Zuführleitung mündet.

Ein derartiges - auch als Schlaufenreaktor - bezeichnetes System ermöglicht es, über eine Begrenzung des Durchflusses in der Abzweigleitung die Konzentration des Reduktionsmittels in der Abführleitung zu regeln.

Vorzugsweise ist die Zuführleitung für das Trägergas als eine Druckgasleitung ausgebildet, so daß das Trägergas den Aufbereitungsreaktor von der Einspeisestelle in Richtung zum Auslaß durchströmt. Das Trägergas kann dabei beispielsweise einer Druckflasche oder aber auch als Prozeßgas an einer geeigneten Stelle der Anlage entnommen werden, an welche die Vorrichtung angeschlossen ist. Als Trägergas kann auch Dampf oder Abgas oder eine Mischung verschiedener Gase, welche die Umsetzung der Substanz in das Reduktionsmittel im wesentlichen nicht beeinflussen, verwendet werden. Von Vorteil ist es dabei, wenn das Trägergas Luft, beispielsweise in Form von Druckluft, ist.

Von Vorteil ist es, wenn Mittel zur Erwärmung des Trägergases vorgesehen sind.

Zur Erwärmung des Trägergases kann z.B. eine elektrische Heizvorrichtung verwendet werden, was eine besonders einfache Temperaturregelung für das Trägergas ermöglicht.

In einer vorteilhaften Ausgestaltung der Erfindung ist jedoch zur Erwärmung des Trägergases an der Zuführleitung ein Wärmetauscher angeordnet. Über diesen Wärmetauscher kann ein warmes Abgas der Verbrennungsanlage geführt werden, so daß ohne eine zusätzlich mit Energie zu versorgende Heizvorrichtung ausgekommen wird.

Den gleichen Vorteil bietet es bei heißen gasförmigen Medien, wenn zumindest ein Teil des gasförmigen Mediums selbst als ein Trägergas verwendet wird. Vorteilhafterweise ist hierzu die Zuführleitung des Aufbereitungsreaktors in Strömungsrichtung des gasförmigen Mediums vor dem Reduktions-Katalysator an die Gasleitung der Verbrennungsanlage angeschlossen und zumindest von einem Teilstrom des gasförmigen Mediums als Trägergas durchströmbar. Dabei kann der Teilstrom des gasförmigen Mediums sowohl aktiv in die Zuführleitung abgesaugt als auch passiv über ein entsprechend ausgestaltetes Anschlußstück in die Zuführleitung geleitet werden. Auch kann das natürliche Druckgefälle in der Gasleitung zum Durchströmen des Aufbereitungsreaktors ausgenützt werden, wenn der Anschluß der Zuführleitung für den Aufbereitungsreaktor in Strömungsrichtung des gasförmigen Mediums vor dem Anschluß der Abführleitung des Aufbereitungsreaktors angeordnet ist. Die geschilderte Ausgestaltung bietet sich insbesondere für ein Abgas einer Verbrennungsanlage an, welches eine für die Umsetzung der Substanz erforderliche Temperatur aufweist.

Die Menge des dem Aufbereitungsreaktor zugeführten Trägergases kann in einfacher Art und Weise über einen Druckregler geregelt werden, welcher beispielsweise einen Drucksensor umfaßt, dessen Ausgangssignale von einem Proportional/Integral-Regler zur Steuerung einer in der Zuführleitung angeordneten Pumpe oder eines Ventils herangezogen werden.

Für die Eindüsung der Substanz in den Aufbereitungsreaktor ist es von Vorteil, wenn der Einlaß für die Substanz an einen unter Druck setzbaren Vorratsbehälter angeschlossen ist und in eine Eindüsvorrichtung im Aufbereitungsreaktor mündet. Alternativ kann auch eine Pumpe mit Druckleitung an den Einlaß angeschlossen sein. Auf diese Weise läßt sich eine einfache und effektive Vermischung der Substanz mit dem den Aufbereitungsreaktor durchströmenden Trägergas erzielen.

Für die Eindüsvorrichtung selbst kann eine Einstoffdüse oder aber auch in vorteilhafter Weise eine Zweistoffdüse verwendet werden. Mit einer Zweistoffdüse, welche zusätzlich an ein Druckgas angeschlossen ist, läßt sich eine besonders feine Zerstäubung der Substanz in das Trägergas und damit eine gute thermische Umsetzung der Substanz in das Reduktionsmittel erzielen.

Neben einer Erwärmung des Trägergases ist es weiter von Vorteil, wenn zusätzlich die umzusetzende Substanz erwärmt wird. Auf diese Weise kann die Umsetzung der Substanz in das Reduktionsmittel verbessert werden. Für die Erwärmung der Substanz bietet es sich an, an den Vorratsbehälter oder die Zuführungsleitung eine elektrische Heizvorrichtung anzuordnen.

Zur Unterstützung der Umsetzung der Substanz in das Reduktionsmittel kann des weiteren in vorteilhafter Weise in dem Aufbereitungsreaktor ein die Umsetzung unterstützender Katalysator angeordnet sein.

Für eine gute Umsetzung der Substanz in das Reduktionsmittel ist es von Vorteil, wenn das Verhältnis von Anströmfläche des Katalysators zu der den Aufbereitungsreaktor durchsetzenden Menge der Substanz zwischen 0,01 uns 0,01 m²/l/h beträgt.

Die Erfindung wird anhand einer Zeichnung näher erläutert. Dabei zeigen:
- FIG 1: eine Vorrichtung zur Durchführung eines Verfahrens zur Reinigung des Abgases einer Gasturbine. Dabei wird in einem separaten Aufbereitungsreaktor Harnstoff in das Reduktionsmittel Ammoniak umgesetzt, wobei als erwärmtes Trägergas ein Teil des Abgases der Gasturbine abgezweigt wird; und
- FIG 2: eine Vorrichtung gemäß Figur 1, wobei jedoch gemäß der Erfindung der separate Aufbereitungsreaktor als ein Schlaufenreaktor ausgebildet ist und wobei zur Erwärmung des Trägergases zusätzlich Wärmetauscher vorgesehen sind.

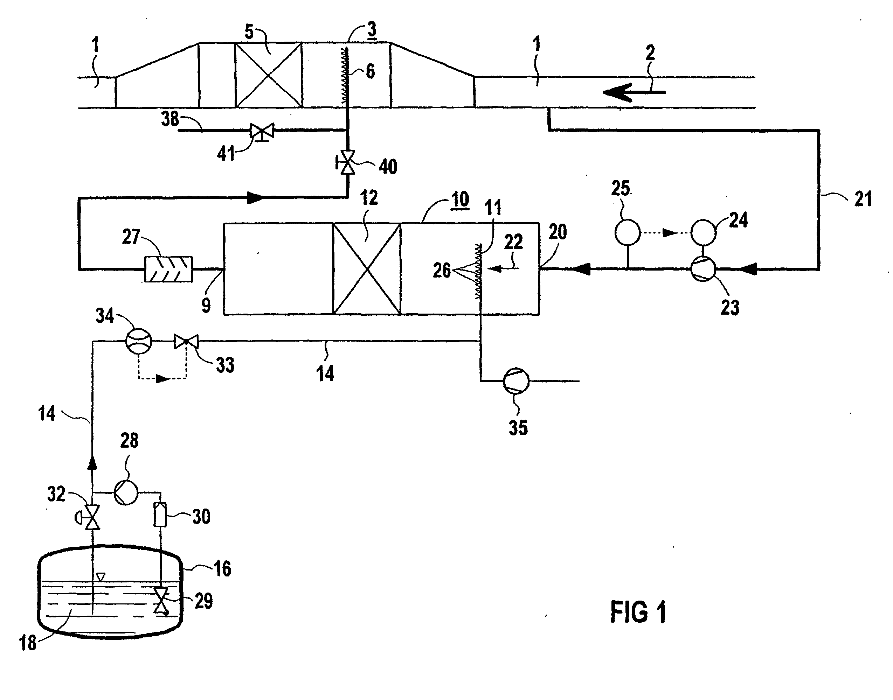

Die in Figur 1 gezeigte Vorrichtung zur selektiven katalytischen Reduktion von Stickoxiden ist zur Entstickung des Abgases einer nicht näher dargestellten Gasturbine vorgesehen. Die Gasleitung 1 ist die Abgasleitung der Gasturbine und wird als gasförmiges Medium 2 von Abgas in Richtung des dargestellten Pfeiles durchströmt. Die Gasleitung 1 weitet sich auf in einen SCR-Reaktor 3, in welchem ein Reduktions-Katalysator 5 und eine Reduktionsmitteleindüsung 6 angeordnet sind. Der Reduktions-Katalysator 5 ist dabei als ein als Vollextrudat hergestellter wabenförmiger Katalysator auf Titandioxidbasis mit Beimengungen an Wolframtrioxid, Molybdäntrioxid und Vanadinpentoxid ausgebildet. Die Reduktionsmitteleindüsung 6 ist als ein Eindüsegitter mit einer Vielzahl von über den Strömungsquerschnitt des SCR-Reaktors 3 verteilten Einstoffdüsen ausgebildet.

Über eine Abführleitung 8 ist die Reduktionsmitteleindüsung 6 an den Auslaß 9 eines separaten Aufbereitungsreaktors 10 zur Aufbereitung des für die an dem Katalysator 5 stattfindende Entstickungsreaktion notwendigen Reduktionsmittels angeschlossen. Der Aufbereitungsreaktor 10 umfaßt eine Eindüsvorrichtung 11 und einen die Aufbereitung unterstützenden Katalysator 12. Die Eindüsvorrichtung 11 des Aufbereitungsreaktors 10 ist über eine Zuführleitung 14 mit einem Vorratsbehälter 16 für die aufzubereitende oder in das Reduktionsmittel umzusetzende Substanz 18 verbunden. Im vorliegenden Fall wird als umzusetzende Substanz eine wässrige Harnstofflösung verwendet, welche in dem Aufbereitungsreaktor 10 in Harnstoff umgesetzt und als Reduktionsmittel über die Reduktionsmitteleindüsung 6 in den SCR-Reaktor 3 eingedüst wird.

Der Aufbereitungsreaktor 10 weist ferner eine Einspeisestelle 20 auf, welche über eine Zuführleitung 21 in Strömungsrichtung des gasförmigen Mediums 2 vor dem SCR-Reaktor 3 an die Gasleitung 1 der Gasturbine angeschlossen ist. Über diese Zuführleitung 21 strömt ein Teilstrom 22 des gasförmigen Mediums 2 in den Aufbereitungsreaktor 10 und durchströmt diesen als Trägergas von der Einspeisestelle 20 in Richtung zum Auslaß 9. Zur Regelung der Durchflußmenge des Teilstroms 22 ist in der Zuführleitung 21 ein Verdichter 23 angeordnet. Der Verdichter 23 wird dabei mittels eines Proportional/Integral-Reglers 24 gesteuert, welcher zur Regelung die Druckwerte eines dem Verdichter 23 nachgeschalteten Druckaufnehmers 25 auswertet.

Ebenso wie die Reduktionsmitteleindüsung 6 ist die Eindüsvorrichtung 11 als ein sich über den Querschnitt des Aufbereitungsreaktors 10 erstreckendes Eindüsgitter ausgebildet. Als Düsen werden für den Aufbereitungsreaktor 10 jedoch sogenannte Zweistoffdüsen 26 verwendet, bei welchen an der Austrittsöffnung der Düse eine Vermischung der einzudüsenden Substanz mit einem Druckgas, beispielsweise Druckluft, stattfindet. Durch die Eindüsung vermischt sich in dem Aufbereitungsreaktor 10 die umzusetzende Substanz 18 (im vorliegenden Fall eine wässrige Harnstofflösung) mit dem durchströmenden Teilstrom 22. Durch die Temperatur des Teilstroms 22 des Abgases von ca. 200 °C findet eine Zersetzung des Harnstoffs teils durch Pyrolyse und teils durch Hydrolyse in Ammoniak und Kohlendioxid statt. Die gleichfalls dabei entstehenden Sekundärprodukte, wie z.B. Melamin oder in Anwesenheit von Schwefeloxiden Ammoniumsulfat, setzen sich bereits in dem Aufbereitungsreaktor 10 nieder und gelangen nicht in die Abgasleitung 1 der Gasturbine.

Zur Unterstützung der Umsetzung des Harnstoffs wird der Teilstrom 22 zusammen mit dem eingebrachten und teilweise bereits in Ammoniak umgesetzten Harnstoff durch den Katalysator 12 geleitet, welcher als ein Hydrolyse-Katalysator ausgebildet ist. Auch der Hydrolyse-Katalysator 12 ist wie der Reduktions-Katalysator 5 als ein wabenförmiger keramischer Vollkörper ausgebildet, dessen Material aus Titandioxid mit Beimengungen an Vanadinpentoxid, Aluminiumtrioxid und Siliziumoxid besteht. Bei einer einstufigen Eindüsung wie gezeigt kann die Flächenbelastung des Katalysators 12, d.h. das Verhältnis der Anströmfläche des Katalysators 12 zu der reaktordurchsetzenden Menge der umzusetzenden Substanz bis zu 0,01 m³/(l/h) betragen. Eine gute Umsetzung des Harnstoffs in Ammoniak wird erzielt, wenn die Länge des Aufbereitungsreaktors 10 zwischen 4 und 6 m beträgt. Auch kann in dem Aufbereitungsreaktor 10 eine mehrstufige Eindüsung erfolgen, wobei jeweils hinter einer Eindüsvorrichtung 11 ein Katalysator 12 angeordnet ist. Die Wahl einer ein- oder mehrstufigen Eindüsung hängt dabei von den jeweiligen Einsatzbedingungen ab.

Der mit dem Reduktionsmittel Harnstoff durchsetzte Teilstrom 22 gelangt schließlich über den Auslaß 9 in die Abführleitung 8, wo zur besseren Vermischung zusätzlich ein statischer Mischer 27 angeordnet ist.

Für die Eindosierung der umzusetzenden Substanz 18 in den Aufbereitungsreaktor 10 wird die Substanz 18 mittels einer Pumpe 28 über eine Ansaugung 29 und einen Filter 30 aus dem Vorratsbehälter 16 in die Zuführleitung 14 befördert. Um einen annähernd konstanten Druck in der Zuführleitung 14 zu gewährleisten, ist in eine Rückführleitung ein Überstromventil 32 angeordnet. Des weiteren befindet sich in der Zuführleitung 14 zur genauen Dosierung der Substanz in den Aufbereitungsreaktor 10 ein Stellventil 33, welches mit einem Volumenstromdetektor 34 kontrolliert wird. Zur Erzeugung der für die in der Eindüsvorrichtung 11 angeordneten Zweistoffdüsen notwendigen Druckluft ist ein Verdichter 35 vorgesehen.

Zur Kontrollierung der pro Zeiteinheit in den SCR-Reaktor 3 eingebrachten Menge an Reduktionsmittel befindet sich in der Abführleitung 8 ein steuerbares Steilventil 40. Über den kontrollierten Zufluß des Teilstroms 22 und der pro Zeiteinheit in den Aufbereitungsreaktor 10 eingebrachten Menge an Harnstoff ist damit eine exakte Dosierung der pro Zeiteinheit in den SCR-Reaktor 3 einzubringenden Menge an Reduktionsmittel möglich.

Zusätzlich ist an der Abführleitung 8 eine nebengeordnete Zusatzleitung 38 vorgesehen, über die mittels eines weiteren Stellventils 41 separat zusätzlich Reduktionsmittel eingebracht werden kann. Diese Zusatzleitung 38 dient gewissermaßen als Sicherheit, wenn die Umsetzung des Harnstoffs in dem Aufbereitungsreaktor 10 aus technischen Gründen ausfallen sollte.

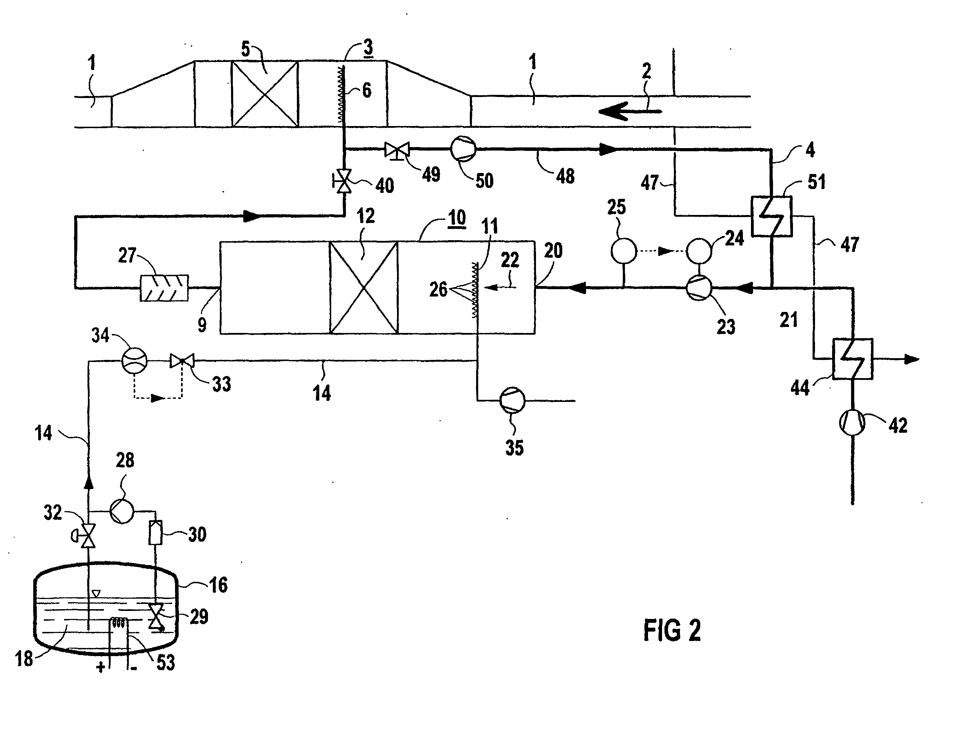

Für die in Figur 2 dargestellte erfindungsgemäß ausgestaltete Entstickungs-Vorrichtung wird gegenüber der in Figur 1 dargestellten Entstickungs-Vorrichtung als den Aufbereitungsreaktor 10 durchströmendes Trägergas nicht ein Teilstrom 22 des zu behandelnden gasförmigen Mediums 2 verwendet, sondern erwärmte Luft. Diese Luft wird mittels eines Verdichters 42 dem Aufbereitungsreaktor 10 über die Zuführleitung 21 zur Verfügung gestellt. Zur Erwärmung der Luft dient ein Wärmetauscher 44, durch welchen über die Leitung 47 heißes Prozeßgas oder Dampf der Gasturbine strömt.

Zusätzlich kann ein Teil des in der Abführleitung 8 strömenden Gasgemisches über die Abzweigleitung 48 in die Zuführleitung 21 zurückgeführt werden. Damit ist der Aufbereitungsreaktor 10 gewissermaßen als ein "Schlaufenreaktor" ausgebildet. Durch die Abzweigleitung 48 ist es möglich, die für die Umsetzung benötigte Menge an Trägergas einzuschränken und gleichzeitig die Menge des sich in dem die Abführleitung 8 durchströmenden Gasgemisches befindlichen Anteils an Reduktionsmittel aufzukonzentrieren. Hierzu wird die Menge an über die Abzweigleitung 48 in den Aufbereitungsreaktor 10 pro Zeiteinheit zurückströmenden Gasgemisches mittels des Stellventils 49 und dem Verdichter 50 kontrolliert. Um eine Abkühlung des über die Abzweigleitung 48 zurückströmenden Gasgemisches zu vermeiden, ist an der Abzweigleitung 48 ein weiterer Wärmetauscher 51 angeordnet, welcher ebenfalls mittels der Leitung 47 von dem heißen Prozeßgas oder Dampf der Gasturbine durchströmt wird.

Zusätzlich ist an dem Vorratsbehälter 16 eine elektrische Heizvorrichtung 53 zur Vorwärmung der Substanz 18 angeordnet.

## Patentansprüche

1. Verfahren zur selektiven katalytischen Reduktion von Stickoxiden in einen sauerstoffhaltigen gasförmigen Medium (2) unter Anwendung einer in ein Reduktionsmittel umsetzbaren Substanz (18), wobei die Substanz (18) in einem separaten Aufbereitungsreaktor (10) außerhalb des Stroms des gasförmigen Madiums (2) zunächst im wesentlichen thermisch in das Reduktionsmittel umgesetzt und anschließend das Reduktionsmittel zur Reaktion mit den Stickoxiden dem gasförmigen Medium (2) vor einem Reduktionskatalysator (5) beigegeben wird, wobei die Substanz (18) in ein den Aufbereitungsreaktor (10) durchströmendes Trägergas eingebracht und in dem Trägergas umgesetzt wird, wobei die Energie zur thermischen Umsetzung von dem Trägergas zur Verfügung gestellt wird,
**dadurch gekennzeichnet, daß** ein Teil des Trägergases nach Durchlaufen des Reaktors (10) abgezweigt und erneut dem Aufbereitungsreaktor (10) zugeführt wird.

2. Verfahren nach Anspruch 1,
**dadurch gekennzeichnet, daß** ein Teilstrom (22) des gasförmigen Mediums (2) aus dem Hauptstrom abgezweigt, als das Trägergas durch den Aufbereitungsreaktor (10) geleitet und zusammen mit dem Reduktionsmittel wieder dem Hauptstrom des gasförmigen Mediums (2) beigegeben wird.

3. Verfahren nach Anspruch 1 oder 2,
**dadurch gekennzeichnet, daß** die Substanz (18) selbst vorgeheizt und in den Aufbereitungsreaktor (10) eingebracht wird.

4. Verfahren nach einem der Ansprüche 1 bis 3,
**dadurch gekennzeichnet, daß** die Substanz (18) mittels einer Druckleitung (14) in dem Aufbereitungsraaktor (10) in das Trägergas eingedüst wird.

5. Verfahren nach einem der Ansprüche 1 bis 4,
**dadurch gekennzeichnet, daß** die Substanz (18) eine wässrige Harnstofflösung ist, aus der im Aufbereitungsreaktor (10) als Reduktionsmittel Ammoniak gebildet wird.

6. Verfahren nach einem der Ansprüche 1 bis 4,
**dadurch gekennzeichnet, daß** die Substanz (18) Ammoniakwasser ist, aus dem im Aufbereitungsreaktor (10) als Reduktionsmittel Ammoniak gebildet wird.

7. Verfahren nach einem der Ansprüche 1 bis 6,
**dadurch gekennzeichnet, daß** das Trägergas zusammen mit der eingebrachten Substanz (18) in dem Aufbereitungsreaktor (10) zur Unterstützung der Umsetzung zusätzlich mit einem Katalysator (12) kontaktiert wird.

8. Vorrichtung zur selektiven katalytischen Reduktion von Stickoxiden in einem sauerstoffhaltigen gasförmigen Medium (2) unter Anwendung einer in ein Reduktionsmittel umsetzbaren Substanz (18), mit einer Gasleitung (1) zur Führung des gasförmigen Mediums (2), mit einem in der Gasleitung (1) angeordneten, von dem gasförmigen Medium (2) durchströmbaren Reduktionskatalysator (5) und mit einem der Gasleitung (1) nebengeordneten Aufbereitungsreaktor (10) zur im wesentlichen thermischen Umsetzung der Substanz (18) in das Reduktionsmittel, wobei der Aufbereitungsreaktor (10) einen Einlaß (11) für die Substanz (18) und einen Auslaß (9) für das Reduktionsmittel aufweist, wobei an dem Auslaß (9) eine Abführleitung (8) angeschlossen ist, welche in Strömungsrichtung des gasförmigen Mediums (2) vor dem Reduktionskatalysator (5) in die Gasleitung (1) mündet, wobei an dem Aufbereitungsreaktor (10) über eine Einspeisestelle (20) eine Zuführleitung (21) für ein Trägergas angeschlossen ist, wobei der Aufbereitungsreaktor (10) von dem Trägergas von der Einspeisestelle (20) in Richtung zum Auslaß (9) für das Reduktionsmittel durchströmbar ist und wobei der Einlaß (11) zur Einbringung der Substanz (18) in das Trägergas ausgebildet ist,
**dadurch gekennzeichnet, daß** an der Abführleitung (8) des Reaktors (10) eine Abzweigleitung (48) angeordnet ist, welche in die Zuführleitung (21) mündet.

9. Vorrichtung nach Anspruch 8,
**dadurch gekennzeichnet, daß** die Zuführleitung (21) als eine Druckgasleitung für das Trägergas ausgebildet ist.

10. Vorrichtung nach Anspruch 8 oder 9,
**dadurch gekennzeichnet, daß** das Trägergas Luft ist.

11. Vorrichtung nach einem der Ansprüche 8 bis 10,
**dadurch gekennzeichnet, daß** Mittel zur Erwärmung des Trägergases vorgesehen sind.

12. Vorrichtung nach Anspruch 11,
**dadurch gekennzeichnet, daß** an der Zuführleitung (21) ein Wärmetauscher (44) zur Erwärmung des Trägergases angeordnet ist.

13. Vorrichtung nach einem der Ansprüche 8 bis 12,
**dadurch gekennzeichnet, daß** die Zuführleitung (21) in Strömungsrichtung des gasförmigen Mediums (2) vor dem Reduktionskatalysator (5) an die Gasleitung (1) angeschlossen und zumindest von einem Teilstrom (22) des gasförmigen Mediums als Trägergas durchströmbar ist.

14. Vorrichtung nach einem der Ansprüche 8 bis 13,
**dadurch gekennzeichnet, daß** die zuführleitung (21) einen Druckregler (23,24,25) umfaßt.

15. Vorrichtung nach einem der Ansprüche 8 bis 14,
**dadurch gekennzeichnet, daß** der Einlaß (11) für die Substanz (18) an einen unter Druck setzbaren Vorratsbehälter (16) angeschlossen ist.

16. Vorrichtung nach Anspruch 15,
**dadurch gekennzeichnet, daß** der Einlaß als eine Eindüsvorrichtung (11) mit einer Zweistoffdüse (26) ausgebildet ist, welche zusätzlich an ein Druckgas angeschlossen ist.

17. Vorrichtung nach Anspruch 15 oder 16,
**dadurch gekennzeichnet, daß** an dem Vorratsbehälter (16) eine elektrische Heizvorrichtung (53) zum Erwärmen der Substanz (18) angeordnet ist.

18. Vorrichtung nach einem der Ansprüche 8 bis 17,
**dadurch gekennzeichnet, daß** in dem Aufbereitungsreaktor (10) ein von dem Trägergas durchströmbarer Katalysator (12) zur Unterstützung der Umsetzung der Substanz (18) in das Reduktionsmittel angeordnet ist.

19. Vorrichtung nach Anspruch 18,
**dadurch gekennzeichnet, daß** das Verhältnis von Anströmfläche des Katalysators (12) zur den Aufbereitungsreaktor (10) durchsetzenden Menge der Substanz (18) zwischen 0,001 und 0,01 m²/(l/h) beträgt.

## Claims

1. Process for the selective catalytic reduction of nitrogen oxides in an oxygen-containing gaseous medium (2) using a substance (18) which can be converted into a reducing agent, the substance (18) firstly being converted into the reducing agent by substantially thermal means in a separate preparation reactor (10) outside the stream of the gaseous medium (2) and then the reducing agent being added to the gaseous medium (2) upstream of a reduction catalytic converter (5) in order to react with the nitrogen oxides, in which process the substance (18) is introduced into a carrier gas flowing through the preparation reactor (10) and being converted in the carrier gas, the energy for the thermal conversion being provided by the carrier gas, **characterized in that** part of the carrier gas is branched off after it has passed through the reactor (10) and is fed back to the preparation reactor (10).

2. Process according to Claim 1, **characterized in that** a part-stream (22) of the gaseous medium (2) is branched off from the main stream, is passed through the preparation reactor (10) as the carrier gas and is added to the main stream of the gaseous medium (2) again together with the reducing agent.

3. Process according to Claim 1 or 2, **characterized in that** the substance (18) itself is preheated and is introduced into the preparation reactor (10).

4. Process according to one of Claims 1 to 3, **characterized in that** the substance (18) is injected into the carrier gas by means of a pressure line (14) in the preparation reactor (10).

5. Process according to one of Claims 1 to 4, **characterized in that** the substance (18) is an aqueous urea solution from which ammonia is formed as the reducing agent in the preparation reactor (10).

6. Process according to one of Claims 1 to 4, **characterized in that** the substance (18) is ammonia water, from which ammonia is formed as the reducing agent in the preparation reactor (10).

7. Process according to one of Claims 1 to 6, **characterized in that** the carrier gas, together with the substance (18) which has been introduced, is additionally brought into contact with a catalyst (12) in the preparation reactor (10) in order to assist the conversion.

8. Device for the selective catalytic reduction of nitrogen oxides in an oxygen-containing gaseous medium (2) using a substance (18) which can be converted into a reducing agent, having a gas line (1) for carrying the gaseous medium (2), having a reduction catalytic converter (5), which is arranged in the gas line (1) and through which the gaseous medium (2) can flow, and having a preparation reactor (10), which is arranged in parallel with the gas line (1), for the substantially thermal conversion of the substance (18) into the reducing agent, the preparation reactor (10) having an inlet (11) for the substance (18) and an outlet (9) for the reducing agent, a discharge line (8) being connected to the outlet (9), which line opens out into the gas line (1) upstream of the reduction catalytic converter (5), as seen in the direction of flow of the gaseous medium (2), a supply line (21) for a carrier gas being connected to the preparation reactor (10) via a feed point (20), it being possible for the carrier gas to flow through the preparation reactor (10) from the feed point (20) towards the outlet (9) for the reducing agent, and the inlet (11) being designed to introduce the substance into the carrier gas, **characterized in that** a branch line (48), which opens out into the supply line (21), is arranged on the discharge line (8) of the reactor (10).

9. Device according to Claim 8, **characterized in that** the supply line (21) is designed as a compressed-gas line for the carrier gas.

10. Device according to Claim 8 or 9, **characterized in that** the carrier gas is air.

11. Device according to one of Claims 8 to 10, **characterized in that** means for heating the carrier gas are provided.

12. Device according to Claim 11, **characterized in that** a heat exchanger (44) for heating the carrier gas is arranged on the supply line (21).

13. Device according to one of Claims 8 to 12, **characterized in that** the supply line (21) is connected to the gas line (1) upstream of the reduction catalytic converter (5), as seen in the direction of flow of the gaseous medium (2), and at least a part-stream (22) of the gaseous medium can flow through the feed line as the carrier gas.

14. Device according to one of Claims 8 to 13, **characterized in that** the supply line (21) comprises a pressure regulator (23, 24, 25).

15. Device according to one of Claims 8 to 14, **characterized in that** the inlet (11) for the substance (18) is connected to a pressurizable reservoir (16).

16. The device according to Claim 15, **characterized in that** the inlet is designed as an injection device (11) having a two-fluid nozzle (26), which is additionally connected to a compressed gas.

17. Device according to Claim 15 or 16, **characterized in that** an electric heater device (53) for heating the substance (18) is arranged on the reservoir (16).

18. Device according to one of Claims 8 to 17, **characterized in that** a catalyst (12) through which the carrier gas can flow is arranged in the preparation reactor (10) for assisting with the conversion of the substance (18) into the reducing agent.

19. Device according to Claim 18, **characterized in that** the ratio of inflow area of the catalyst (12) to the amount of the substance (18) which passes through the preparation reactor (10) is between 0.001 and 0.01 m²/(l/h).

## Revendications

1. Procédé de réduction catalytique sélective d'oxydes d'azote dans un milieu (2) gazeux contenant de l'oxygène, en utilisant une substance (18) pouvant être transformée en un agent réducteur, la substance (18) étant transformée dans un réacteur (10) distinct de préparation en dehors du courant de milieu (2) gazeux d'abord d'une manière essentiellement thermique en l'agent réducteur, et l'agent réducteur étant ensuite ajouté pour la réaction sur les oxydes d'azote du milieu (2) gazeux en amont d'un pot (5) catalytique de réduction, la substance (18) étant mise dans un gaz porteur passant dans le réacteur (10) de préparation et étant transformée dans le gaz porteur, l'énergie pour la transformation par voie thermique étant mise à disposition par le gaz porteur,
**caractérisé en ce que** l'on dérive une partie du gaz porteur après qu'il a passé dans le réacteur (10) et on le retourne au réacteur (10) de préparation.

2. Procédé suivant la revendication 1,
**caractérisé en ce que** l'on dérive un courant (22) partiel du milieu (2) gazeux du courant principal, on l'envoie en tant que gaz porteur dans le réacteur (10) de préparation et on l'ajoute à nouveau en même temps que l'agent réducteur au courant principal du milieu (2) gazeux.

3. Procédé suivant la revendication 1 ou 2,
**caractérisé en ce que** l'on préchauffe la substance (18) elle-même et on l'introduit dans le réacteur (10) de préparation.

4. Procédé suivant l'une des revendications 1 à 3,
**caractérisé en ce que** l'on injecte la substance (18) dans le gaz porteur au moyen d'un conduit (14) sous pression dans le réacteur (10) de préparation.

5. Procédé suivant l'une des revendications 1 à 4,
**caractérisé en ce que** la substance (18) est une solution aqueuse d'urée de laquelle on forme dans le réacteur (10) de préparation de l'ammoniac en tant qu'agent réducteur.

6. Procédé suivant l'une des revendications 1 à 4,
**caractérisé en ce que** la substance (18) est de l'ammoniaque à partir de laquelle on forme dans le réacteur (10) de préparation de l'ammoniac comme agent réducteur.

7. Procédé suivant l'une des revendications 1 à 6,
**caractérisé en ce que** l'on met le gaz porteur ensemble avec la substance (18) qui est introduite dans le réacteur (10) de préparation en contact en outre avec un pot (12) catalytique pour favoriser la transformation.

8. Dispositif de réduction catalytique sélective d'oxydes d'azote dans un milieu (2) gazeux contenant de l'oxygène, en utilisant une substance (18) qui peut être transformée en un agent réducteur, comprenant un conduit (1) pour le passage du milieu (2) gazeux, un pot (5) catalytique de réduction monté dans le conduit (1) pour le gaz et dans lequel le milieu (2) gazeux peut passer et un réacteur (10) de préparation monté à côté du conduit (1) pour le gaz et destiné à la transformation sensiblement par voie thermique de la substance (18) en l'agent réducteur, le réacteur (10) de préparation ayant une entrée (11) pour la substance (18) et une sortie (9) pour l'agent réducteur, un conduit (8) d'évacuation étant raccordé à la sortie (9) et débouchant dans la direction du courant de milieu (2) gazeux en amont du pot (5) catalytique de réduction dans le conduit (1) pour le gaz, un conduit (21) d'amenée d'un gaz porteur étant raccordé au réacteur (10) de préparation par un point (20) d'alimentation, le réacteur (10) de préparation pouvant être parcouru par le gaz porteur d'un point (20) d'alimentation en direction de la sortie (9) de l'agent réducteur et l'entrée (11) étant constituée pour mettre la substance (18) dans le gaz porteur,
**caractérisé en ce que** sur le conduit (8) d'évacuation du réacteur (10) est monté un conduit (48) de dérivation qui débouche dans le conduit (21) d'amenée.

9. Dispositif suivant la revendication 8,
**caractérisé en ce que** le conduit (21) d'évacuation est constitué en conduit pour du gaz comprimé destiné au gaz porteur.

10. Dispositif suivant la revendication 8 ou 9,
**caractérisé en ce que** le gaz porteur est de l'air.

11. Dispositif suivant l'une des revendications 8 à 10,
**caractérisé en ce qu'**il est prévu des moyens pour réchauffer le gaz porteur.

12. Dispositif suivant la revendication 11,
**caractérisé en ce qu'**il est monté sur le conduit (21) d'évacuation un échangeur de chaleur (44) destiné à réchauffer de l'air porteur.

13. Dispositif suivant l'une des revendications 8 à 12,
**caractérisé en ce que** le conduit (21) d'amenée est raccordé dans la direction d'écoulement du milieu (2) gazeux en amont du pot (5) catalytique de réduction au conduit (1) pour le gaz et il peut y passer au moins un courant (22) partiel du milieu gazeux en tant que gaz porteur.

14. Dispositif suivant l'une des revendications 8 à 13,
**caractérisé en ce que** le conduit (21) d'amenée comprend un régulateur (23, 24, 25) de pression.

15. Dispositif suivant l'une des revendications 8 à 14,
**caractérisé en ce que** l'entrée (11) pour la substance (18) est raccordée à un réservoir (16) qui peut être mis sous pression.

16. Dispositif suivant la revendication 15,
**caractérisé en ce que** l'entrée est constituée en tant que dispositif (11) d'injection ayant une cuve (26) pour deux substances, dispositif d'injection qui est raccordé en outre à un gaz comprimé.

17. Dispositif suivant l'une des revendications 15 ou 16,
**caractérisé en ce qu'**il est monté sur le réservoir (16) un dispositif (53) électrique de chauffage destiné à réchauffer la substance (18).

18. Dispositif suivant l'une des revendications 8 à 17,
**caractérisé en ce qu'**il est monté dans le réacteur de préparation un pot (12) catalytique dans lequel peut passer du gaz porteur et qui est destiné à favoriser la transformation de la substance (18) en l'agent réducteur.

19. Dispositif suivant la revendications 18,
**caractérisé en ce que** le rapport de la surface d'entrée dans le pot (12) catalytique à la quantité de la substance (18) passant dans le réacteur (10) de préparation est compris entre 0,001 et 0,01 m²/(l/h).
